# EUROPÄISCHE PATENTSCHRIFT

(11) **EP 3 228 913 B1**
(45) Veröffentlichungstag und Bekanntmachung des Hinweises auf die Patenterteilung: **09.01.2019**
(21) Anmeldenummer: 17165175.5
(22) Anmeldetag: 06.04.2017
(51) Int. Cl.: F16K 31/08, F16K 35/16, F16K 1/36, F16K 31/06

(54) **ELEKTROPNEUMATISCHES MAGNETVENTIL**
ELECTROPNEUMATIC SOLENOID VALVE
ÉLECTROVANNE ÉLECTROPNEUMATIQUE

(30) Priorität: 07.04.2016 DE 102016106411
(43) Veröffentlichungstag der Anmeldung: 11.10.2017
(73) Patentinhaber: Samson Aktiengesellschaft, 60314 Frankfurt am Main (DE)
(72) Erfinder: Kolbenschlag, Stefan, 64291 Darmstadt (DE)
(74) Vertreter: Schmid, Nils T.F.

(56) Entgegenhaltungen:
- DE-A1-102008 063 339
- DE-B3-102007 030 405
- US-A1- 2010 224 810

## Beschreibung

Die Erfindung betrifft ein elektropneumatisches Magnetventil, wie einen elektropneumatischen Wandler, zum Einstellen und Abgeben eines pneumatischen Ausgabesignals beispielsweise an ein elektropneumatisches Feldgerät, wie einen pneumatischen Antrieb, eines prozesstechnischen Feldgeräts, wie eines Stellgeräts. Ein solches elektropneumatisches Magnetventil wird insbesondere auch I/P-Wandler genannt. Das elektropneumatische Magnetventil wird für das pneumatisch betriebene Feldgerät, insbesondere Stellgerät, einer prozesstechnischen Anlage, wie einer chemischen Anlage, einer petrochemischen Anlage, einer lebensmittelverarbeitenden Anlage, wie einer Brauerei, einer Kernkraftwerkanlage oder dergleichen, eingesetzt.

Ein solches elektropneumatisches Magnetventil ist aus DE 196 36 207 C2 bekannt. Der elektropneumatische Wandler ist mit einer axial und radial von einer Feder gehaltenen Prallplatte gebildet, welche ventilgemäß Luftführungskanäle freigibt oder schließt. Die Prallplatte wird im Normalbetrieb des Magnetventils durch eine magnetventileigene elektropneumatische Stelleinrichtung in Form einer Spule betätigt, die bei Bestromung die Prallplatte entgegen der axialen Vorspannung der Feder verlagert. Grundsätzlich hat sich das elektromagnetische Magnetventil in der Prozesstechnik bewährt, allerdings besteht auf dem Gebiet der Prozesstechnik das allgemeine Bedürfnis, die Funktionsfähigkeit eines elektropneumatischen Magnetventils vor dessen Montage, insbesondere vor dessen elektrischen Anschluss für den Normalbetrieb, zu überprüfen.

DE 10 2007 030 405 B3 betrifft einen elektromagnetischen Aktor für ein Ventil mit einer Spule und einem Flussmantel.

DE 10 2008 063 339 A1 betrifft ein bistabiles Ventil für gasförmige und flüssige Medien.

US 2010/0224810 A1 betrifft eine Vorrichtung und ein Verfahren zum Testen eines elektrischen Sprinklerventils.

Es ist Aufgabe der Erfindung, die Nachteile des Standes der Technik zu überwinden, insbesondere ein elektropneumatisches Magnetventil auf dessen insbesondere vollständige Funktionsweise überprüfen zu können, ohne die Montage, insbesondere elektrische Montage, des Magnetventils an dem prozesstechnischen Feldgerät vollständig abschließen zu müssen, wobei insbesondere die Vielzahl der zu prüfenden Bestandteile des unmontierten Magnetventils möglichst einfach für ungeübtes Personal überprüfbar sein sollen, insbesondere vor allem ohne elektrische Bestromung der Spule. Insbesondere sei die Prallplatte zu betätigen, ohne die technische Magnetventilumgebung negativ zu beeinflussen.
Diese Aufgabe wird durch die Merkmale von Anspruch 1 gelöst.
Danach ist ein elektropneumatisches Magnetventil für ein pneumatisch betriebenes Feldgerät, einer prozesstechnischen Anlage, wie einer chemischen Anlage, einer petrochemischen Anlage, einer lebensmittelverarbeitenden Anlage, wie eine Brauerei, eine Kernkraftwerkanlage oder dergleichen, vorgesehen.
Das erfindungsgemäße elektropneumatische Magnetventil umfasst ein magnetisierbares Ventilglied, wie eine Prallplatte, beispielsweise wie sie aus der oben genannten DE 196 36 207 C2 bekannt ist. Das Ventilglied ist dazu ausgelegt, zwischen wenigstens zwei Betriebsstellungen verfahrbar zu sein. Hierzu kann das Ventilglied an einem Magnetventilgehäuse einem festgelegten Stellweg folgend, insbesondere translatorisch oder rotatorisch, gelagert oder geführt sein. Auch eine federbeaufschlage Zwangsverlagerung kann dem Ventilglied zugeordnet werden. Des Weiteren hat das elektropneumatische Magnetventil eine elektromagnetische Stelleinrichtung, wie eine Induktivität, wie eine Spule, zum elektrischen Generieren und Mitteilen von Verfahrkräften an das Ventilglied, um letzteres zwischen den wenigstens zwei Betriebsstellungen, insbesondere relativ zu den oben genannten Ventilkanälen, verfahren zu können. Vorzugsweise hat das Ventilglied in Kombination mit der elektropneumatischen Stelleinrichtung und gegebenenfalls einer Ventilgliedlagerung zwei magnetventilgehäusefest definierte Betriebsstellungen, insbesondere eine Belüftungsstellung, in der ein pneumatischer Magnetventilausgang mit einem pneumatischen Stellsignal, das insbesondere durch die jeweilige Stellung des Ventilglieds der Stärke nach eingestellt werden kann, belüftet wird, und eine Betriebsstellung, in der der pneumatische Magnetventilausgang entlüftet wird.
Des Weiteren hat das erfindungsgemäße elektropneumatische Magnetventil eine gegenüber der elektromagnetischen Stelleinrichtung eigenständige Ventilgliedbetätigung, wie eine von Hand zu betreibende Ventilgliedbetätigung, die insbesondere bezüglich der Generierung der auf das Ventilglied wirkenden Verfahrkräfte und/oder dem Auslösen und Weitergeben der Verfahrkräfte an das Ventilglied eigenständig arbeitet. Die zusätzliche Ventilgliedbetätigung ist bezüglich ihres Betriebs unabhängig von dem Betrieb der elektromagnetischen Stelleinrichtung ausgestaltet, so dass das Ventilglied unabhängig von der elektromagnetischen Stelleinrichtung, insbesondere der Bestromung der Stelleinrichtung, vorzugsweise bei ausgeschalteter Bestromung der Stelleinrichtung, zwischen den wenigstens beiden festgelegten Betriebsstellungen gestellt und verfahren werden kann. Die zusätzliche Ventilgliedbetätigung mittels eines entsprechenden Sicherheitsmechanismus nur betriebsgemäß funktionieren darf, wenn die elektromagnetische Stelleinrichtung inaktiv ist, insbesondere deren Spule unbestromt ist. Eine Sicherheitseinrichtung ist vorgesehen, welche ein Verbringen der Ventilgliedbetätigung in deren aktivem Zustand, beispielsweise durch den Aktivierungsmechanismus, unterbindet, wenn die elektromagnetische Stelleinrichtung betriebs- und funktionsgemäß betrieben ist, insbesondere deren Spule bestromt ist.
Durch die Ventilgliedbetätigung ist es möglich, die Funktionsweise insbesondere der Mechanik zum Halten und Verfahren des Ventilglieds zwischen den wenigstens zwei Betriebsstellungen zu überprüfen. Erfindungsgemäß hat die Ventilgliedbetätigung ein insbesondere statisches Dauermagnetfeld, beispielsweise einen Dauermagneten, oder einen Elektromagneten, um das Ventilglied berührungslos betätigen und ihm magnetische Betätigungskräfte mitzuteilen, um somit die Verlagerung des Ventilglieds zu veranlassen. Des Weiteren hat die Ventilgliedbetätigung einen Aktivierungsmechanismus, um insbesondere nach Zeit oder Stellung des Ventilglieds die Überprüfungs-Betätigung des Ventilglieds auszulösen oder zu beenden. Durch den Aktivierungsmechanismus soll die Ventilgliedbetätigung, insbesondere das Magnetfeld, zwischen einem Passivbetriebszustand, in dem das Ventilglied von dem Dauermagneten unbeweglich bleibt, und einem Aktivbetriebszustand versetzbar sein, in dem das Ventilglied insbesondere ausschließlich aufgrund der Magnetkraft aus einer insbesondere erzwungenen Betriebsstellung in eine weitere Betriebsstellung verfahren werden kann. In dem Passivbetriebszustand, in den der Aktivierungsmechanismus den Dauermagneten schalten oder verbringen kann, kann das Magnetfeld durchaus weiter aktiv sein, allerdings ist dieses im Passivbetriebszustand nicht ausreichend, um das Ventilglied zu verlagern. In dem Aktivbetriebszustand gelingt es dem Aktivierungsmechanismus, dass das Magnetfeld der zusätzlichen Ventilgliedbetätigung derart ausgelegt ist, insbesondere stark genug und/oder im Wesentlichen direkt zum Ventilglied ausgerichtet ist, dass das Ventilglied aus einer Betriebsstellung, insbesondere zu den Ventilkanälen, bewegt wird.

Das Magnetfeld kann durch einen Dauermagneten erzeugt werden, der beispielsweise aus einem Stück hartmagnetischem Material gebildet sein kann. Hierzu sind Legierungen aus Eisen, Kobalt, Nickel und/oder geeigneten Ferriten auszuwählen. Das Magnetfeld kann auch durch einen Elektromagneten oder einen elektrischen Stromfluss erzeugt werden, der beispielsweise durch eine magnetventileigene Stromversorgung realisiert ist oder extern gegenüber der elektromagnetischen Stelleinrichtung eigenen Anschlüssen eingeleitet wird. Vorzugsweise ist ein Dauermagnet eingesetzt, durch den das Verlagerungs-Magnetfeld sogar vor dem elektrischen Montageanschluss erzeugt wird.

Durch die kontaktlose Betätigung durch das Magnetfeld sind Durchbrüche für einen mechanischen Zugriff auf das Ventilglied entbehrlich. Gleiches gilt für Abdichtungen, welche mit den mechanischen Zugriffsbauteilen zusammenwirken müssten.

Bei einer Weiterbildung der Erfindung ist der Aktivierungsmechanismus eine Schalteinrichtung, wie eine Abschalt- und/oder Zuschalteinrichtung, welche das Magnetfeld aktiv erzeugt und abschaltet. Beispielsweise kann der Schaltzustand durch Änderung oder Weglassen einer elektrischen Bestromung realisiert werden, um die magnetische Wirkung zu erzielen. Ein Aktivierungsmechanismus ist auch dadurch realisierbar, dass nicht nur die dauermagnetische Wirkung erzeugt oder abgeschaltet wird, sondern dass eine statische dauermagnetische Wirkung auf das Ventilglied beispielsweise durch eine Kinematik und/oder entsprechende magnetische Isolationsmaßnahmen erhöht oder reduziert, insbesondere aufgehoben oder zugelassen wird.

Mit der zusätzlichen Ventilgliedbetätigung kann nicht nur die mechanische Funktionsfähigkeit des elektropneumatischen Magnetventils überprüft werden, indem die Ventilgliedbetätigung das Ventilglied aus einer dessen Betriebsstellungen verfahren lässt, auch der Einsatz des Magnetfelds ermöglicht eine Überprüfung der mechanischen/pneumatischen Funktionsfähigkeit des Magnetventils bei dessen betriebsgemäßer Betätigung mittels der elektromagnetischen Stelleinrichtung. Erfindungsgemäß wird eine umfängliche Funktionsüberprüfung des elektropneumatischen Magnetventils erreicht, das sich einer elektromagnetischen Stelleinrichtung bedient.

Bei einer bevorzugten Ausführung der Erfindung umfasst der Aktivierungsmechanismus eine Verlagerungsmechanik zum Bewegen des Magnetfelds, insbesondere des Dauermagneten, um dieses relativ zu dem Ventilglied zu bewegen, wodurch das Magnetfeld bezüglich seines magnetischen Einflusses auf das Ventilglied den aktiven und passiven Betriebszustand erreichen kann. Die Verlagerungsmechanik oder -einrichtung kann wenigstens eine Verlagerungsendposition, vorzugsweise zwei Verlagerungsendpositionen, zwischen denen das Magnetfeld verlagert werden kann, festlegen. Eine Verlagerungsendposition ist dem Passivbetriebszustand zugeordnet, während die andere Verlagerungsendposition dem Aktivbetriebszustand zuzuordnen ist. In einer Verlagerungsendposition ist das Magnetfeld insbesondere nahe genug an dem zu betätigenden Ventilglied angeordnet, so dass letzteres insbesondere ausschließlich unter dem Einfluss des anliegenden Magnetfelds insbesondere des Dauermagneten verfahren werden kann. Das Ventilglied kann insbesondere als Hubschlussglied oder Schwenkverschlussglied ausgeführt sein, wodurch es entweder angehoben oder verschwenkt werden kann, um zwischen den wenigstens beiden Betriebsstellungen verlagert zu werden. Je nach Verlagerungsweg wird das Magnetfeld in dessen Aktivbetriebszustand versetzt. Die Verlagerungseinrichtung zum Bewegen des Magnetfelds kann eine Schwenkachse aufweisen, die insbesondere ortsfest zu einem Gehäuse des Magnetventils angeordnet ist. Um diese Schwenkachse kann das Magnetfeld bezüglich der wenigstens einen Verlagerungsendposition schwenkbar sein. Vorzugsweise umfasst die Verlagerungseinrichtung eine Magnetfeldführung, damit das Magnetfeld zwischen den wenigstens beiden Verlagerungsendpositionen auf einen definierten Führungsweg verlagert werden kann. Dabei kann das Magnetfeld entweder translatorisch oder rotatorisch oder einer Kombination zwischen den beiden Verlagerungsendpositionen geführt sein. Um die Verlagerungsendpositionen exakt zu definieren, kann in Bewegungsrichtung ein Bewegungsanschlag vorgesehen sein, um die jeweilige Verlagerungsendposition festzulegen.

Die Fixierung eines das Magnetfeld erzeugenden Dauermagneten in den jeweiligen beiden Stellungen kann insbesondere ausschließlich mittels des dauermagneteigenen Magnetfeldes erfolgen. In der Aktivposition wird der Dauermagnet in der Position mittig einer von der Spule der elektromagnetischen Stelleinrichtung umgebenen Kernstruktur gehalten, weil die ortsfeste weichmagnetische Kernstruktur der elektromagnetischen, insbesondere passiven, Stelleinrichtung von dem beweglichen Magneten angezogen und er dadurch in dieser Position gehalten wird. In der Passivposition kann der Dauermagnet ebenfalls aufgrund seiner Magnetkraft gehalten werden, indem ein zusätzliches weichmagnetisches, hartmagnetisches oder dauermagnetisches Bauteil in der Nähe der Passivposition ortsfest am Gehäuse des Magnetventils fixiert ist und sich der Dauermagnet und das Bauteil gegenseitig anziehen.

Bei einer Weiterbildung der Erfindung umfasst der Aktivierungsmechanismus eine Magnetfeldabschirmung zum Blockieren und/oder Ablenken/Umlenken des Magnetfelds. Die Magnetfeldabschirmung soll entweder die Magnetfeldlinien derart örtlich bündeln oder konzentrieren, dass der Magnetfeldeinfluss / die magnetischen Betätigungskräfte an dem Ventilglied gegenüber dem Passivbetriebszustand verstärkt werden oder derart umgelenkt und abgeschirmt werden, dass der Magnetfeldeinfluss die Magnetfeldkraft an dem Ventilglied insbesondere gegenüber dem Aktivbetriebszustand reduziert, abgebaut oder beseitigt wird. Des Weiteren kann die Magnetfeldabschirmung die Funktion haben, dass das Magnetfeld der Ventilgliedbetätigung weitere elektropneumatische oder elektromagnetische oder sonstige elektrische Elemente des elektropneumatischen Magnetventils nicht stört. Die Magnetfeldabschirmung ist vorzugsweise derart dem Magnetfeld örtlich zugeordnet, dass es für den Passiv- oder Aktivbetriebszustand gegenüber dem Ventilglied insbesondere teilweise blockiert und/oder umgelenkt wird. In dem Passivbetriebszustand kann beispielsweise die Magnetfeldabschirmung das Magnetfeld gegenüber dem Ventilglied derart abschirmen und/oder umlenken, dass eine Bewegung des Ventilglieds unter dem Einfluss des durchaus vorhandenen Magnetfeldes verhindert wird. Die Magnetfeldkraft reicht aber nicht aus, um das Ventilglied zu bewegen oder erreicht kaum noch das Ventilglied. In dem Aktivbetriebszustand lässt die Magnetfeldabschirmung das Magnetfeld derart unbeeinflusst oder kann diese hin zum Ventilglied umlenken/konzentrieren, dass das Ventilglied insbesondere ausschließlich unter dem Einfluss des Magnetfeldes bewegt werden kann.

Vorzugsweise ist die Magnetfeldabschirmung gegenüber dem Magnetfeld, insbesondere einem Dauermagneten, beweglich gelagert. Hierzu kann eine Verlagerungsmechanik der Magnetfeldabschirmung an dem Magnetventil vorgesehen sein. Vorzugsweise soll die Magnetfeldabschirmung von der Außenseite des Magnetventils betätigbar sein, insbesondere manuell. Vorzugsweise ist eine dem Dauermagneten benachbarte Aufnahme für die Magnetfeldabschirmung vorgesehen. In der Aufnahme kann die Magnetfeldabschirmung an dem Magnetventil, insbesondere an einer Außenseite eines Magnetventilgehäuses, fest angebracht sein. Vorzugsweise ist beim Belegen der Aufnahme mit der Magnetfeldabschirmung der Passivbetriebszustand erreicht und bei Freigabe der Aufnahme durch Entfernen der Magnetfeldabschirmung ist der Aktivbetriebszustand erreicht. Vorzugsweise ist die Aufnahme durch eine zur Magnetfeldabschirmung im Wesentlichen formkomplementäre Aussparung insbesondere an der Außenseite des Magnetventilgehäuses realisiert. Vorzugsweise ist die Magnetfeldabschirmung als eine Art Kapselstruktur gebildet, um den wie auch immer geformten Dauermagneten annähernd vollständig umgeben zu können. Vorzugsweise ist eine Seite des Dauermagneten frei, um ein Ein- und Ausschieben der Abschirmung von dieser Seite heraus zu erreichen. Vorzugsweise ist die Aufnahme an einer insbesondere ringförmigen, vorzugsweise kreisringförmigen, Magnetfeldabschirmung derart formangepasst, dass die Magnetfeldabschirmung ohne zusätzliche mechanische Feststellmittel ausschließlich unter dem Einfluss deren Gewichtskraft und der magnetischen Haltekraft des vorzugsweise magnetventilgehäusefest angeordneten Magnetfeldes insbesondere des Dauermagneten in der Aufnahme gehalten wird. Bei einer bevorzugten Ausführung der Erfindung ist die Magnetfeldabschirmung mit einer diese beweglich haltenden Führungseinrichtung kombiniert, durch die die Magnetfeldabschirmung von einer Verstauungsposition in eine Abschirmposition verfahrbar ist. Auch in der Verstauungsposition kann ein Festlegen der Magnetventilabschirmung an einer Außenseite des Magnetventilgehäuses realisiert sein. In der Abschirmposition kann das Magnetfeld in seinen Passivbetriebszustand versetzt sein.

Ganz im Allgemeinen kann bei einem erfindungsgemäßen elektropneumatischen Magnetventil eine Verstauungsposition für die beweglich anbringbare Magnetfeldabschirmung vorgesehen sein, die von deren Abschirmposition, in der das Magnetfeld insbesondere in dessen Passivbetriebszustand versetzt wird, entfernt ist und/oder in der Verstauungsposition der Magnetfeldabschirmung das Magnetfeld insbesondere des Dauermagneten im Wesentlichen unbeeinflusst lässt, so dass das Magnetfeld seine Magnetfeldlcräfte ventilgliedbetätigungsgemäß einsetzen kann. Insbesondere ist das Magnetventil mit einer Feststelleinrichtung zum Halten der Magnetfeldabschirmung vorzugsweise in deren Verstauungsposition ausgestattet.

Bei einer bevorzugten Ausführung der Erfindung hat die elektromagnetische Stelleinrichtung des Magnetventils eine elektrisch zu bestromende Spule insbesondere mit einem von der Spule umgebenen Spulenkanal. Die Spule ist vorzugsweise rotationssymmetrisch, vorzugsweise zylindrisch, geformt. Des Weiteren hat die Stelleinrichtung eine die Spule axial und radial umgebende, insbesondere weichmagnetische Kernstruktur, die in dem Spulenkanal liegt. Die Kernstruktur kann aus einem spuleninnenseitigen Kern und einem die Spule umgebenden Mantel bestehen. An dem Mantel und Kern, diese strukturell koppelnd, schließt in Axialrichtung benachbart der von dem Ventilglied ab gewandten Spulenstirnseite eine Stirnwand an, um die Spule axial zu bedecken. Ventilbetätigungsseitig ist ein Hohlraum zwischen Kernstruktur und Mantel zum Aufnehmen der Spule axial offen.

Die Kernstruktur bestehend aus dem Innenkern und dem Außenmantel sowie der ventilbetätigungsseitigen Stirnwand hat eine Ventilgliedseite, die insbesondere zum Einführen der Spule axial offen ist. Bei der Kernstruktur auf der Seite der Ventilgliedbetätigung ist die Stärke der Stirnwand deutlich geringer als die des restlichen Teils, insbesondere des Innenkerns und des Außenmantels, um eine Magnetfeldkonzentration oder -bündelung des zentrisch angeordneten Magnetfelds zur Ventilgliedbetätigung derart zu erreichen, dass mittels magnetischer Sättigung an der Stirnendwand Magnetfeldlinien in den Innenkern axial parallel zur Axialrichtung hin zum Ventilglied konzentriert werden. Mit dem insbesondere als Prallplatte ausgebildeten Ventilglied wird das Magnetfeld an der ventilgliedseitig offene Kernstruktur geschlossen, wenn das Ventilglied an der Stirnseite der Kernstruktur herangeführt wird oder anliegt.

Die elektromagnetische Stelleinrichtung (Anker der Spule) und die Kernstruktur können den magnetischen Aktor der elektropneumatischen Stelleinrichtung bilden. Die Kernstruktur mit der Spule bilden einen stationären Teil und die Prallplatte mit einer eingepressten Kugel bilden die beweglichen Ventilteile. Wird die elektromagnetische Stelleinrichtung bestromt, entstehen Magnetkräfte, welche das Ventilglied in Richtung der Kernstruktur anziehen. Ein Luftspalt, der im unbetätigten Zustand zwischen dem Eisenkern und dem Ventilglied vorliegt und durch eine auf das Ventilglied wirkende Feder erzwungen ist, wird verringert, bis das Ventilglied an einem Lüftungssitz des Magnetventilgehäuses anliegt. Ein geringer Luftspalt ist auch nach dem magnetischen Anziehen erwünscht, damit die Prallplatte nicht an der Kernstruktur aufgrund der geringen bleibenden Magnetisierung haften bleibt. Es entsteht ein quasi geschlossener Magnetfeldschluss.

Die elektromagnetische Stelleinrichtung ist mittels eines Isolierkörpers oder Wickelkörpers (z.B. aus Kunststoff) elektrisch gegen die Kernstruktur isoliert. Das Ventilglied kann als insbesondere schwimmend gelagerte Prallplatte mit einer mittig angeordneten Kugelstruktur ausgebildet sein, welche mit dem jeweiligen Lüftungssitz dichtend zusammenwirken kann.

Alternativ und zusätzlich dazu können die Spule und die Kernstruktur gegenüber dem Magnetventilgehäuse ortsfest, unbeweglich angebracht sein.

Bei einer bevorzugten Ausführung der Erfindung ist das Ventilglied als beweglich gelagertes Prallventilglied ausgebildet, das vorzugsweise als eine Prallplatte insbesondere mit einem axial vorstehenden, wenigstens einen Luftkanal des Magnetventils freigebenden oder belegenden Verschlussglied ausgebildet ist. Das Verschlussglied kann vorzugsweise fest an der Prallplatte, insbesondere in deren Mitte, angebracht sein. Das Prallventilglied kann vorzugsweise bezüglich einer Spulenachse axial von einem dem Ventilglied zugewandten Spulenstirnende versetzt angeordnet sein. Insbesondere ist an einem dem prallgliedseitigen Spulenende diametral gegenüberliegenden Spulenende das Magnetfeld ortsfest festgelegt, insbesondere der Dauermagnet an dem Magnetventilgehäuse befestigt, insbesondere eine Verlagerungsendposition des beweglichen Dauermagneten vorgesehen.

Bei einer Weiterbildung der Erfindung formt die Kernstruktur eine magnetfeldseitige, das benachbarte Axialende der Spule bedeckende Stirnwand, an der insbesondere ein Innenkern, der sich durch den Spulenkanal der Spule hindurcherstreckt, einstückig oder mehrteilig anschließen kann. In der Stirnwand ist vorzugsweise auf radialer Höhe der Spule insbesondere mit den radialen Abmessungen der Spule deckungsgleich eine umlaufende, axiale Materialaussparung oder -schwächung, insbesondere eine vorzugsweise ringförmige Vertiefung, eingebracht.

Die Stirnseite selbst kann eine Wandstärke aufweisen, welche geeignet ist die Feldlinien zu beeinflussen, um eine magnetische Sättigung im Bereich der Stirnwand zu erzeugen, durch die eine Konzentration des Magnetfelds hin zu dem Innenkern und damit zu dem Ventilglied erreicht wird. Durch die Magnetsättigung im Bereich der Stirnseite können Feldlinien nicht im direkten Wege zurück zum anderen Pol des Magneten verlaufen, sondern sind zu einem Umweg durch den (dickeren) inneren Kern hin zum Ventilglied gezwungen. Die gebündelten Feldlinienkräfte verursachen eine Anziehung des Ventilglieds mit dem Ziel den Luftspalt zu schließen. Die Materialschwächung an der Stirnseite oder die gegenüber dem Außenmantel und Innenkern kleinere Stirnwandstärke sollte derart gewählt sein, dass der Magnetkreis bei Spulenbetrieb nicht verschlechtert wird. Die Axialstärke der Stirnseite sollte nicht kleiner werden als der kleinste Axialquerschnitt des Ventilglieds. Denn auch ohne eine Schwächung der Stirnseite könnte ein sehr starkes Magnetfeld die Prallplatte bewegen. Es wäre dann allerdings ein erheblich stärkerer Magnet nötig.

Die Materialaussparung an der Stirnseite dient dazu, dass Feldlinien des Magnetfelds bezüglich deren Verlauf hin zum Ventilglied zu bündeln oder zu konzentrieren. Dabei kann die Materialaussparung und die die Materialaussparung definierende Kernstruktur derart ausgelegt sein, dass im Aktivbetriebszustand des Magnetfelds dessen Feldlinien hin zu dem Ventilglied umgelenkt werden, so dass im Aktivbetriebszustand das Ventilglied, vorzugsweise ein Prallglied hin zu einem ventilgliedseitigen Anschlag der Kernstruktur magnetisch angezogen wird. Beim Anschlag oder Aufprall soll ein in der Kernstruktur ausgebildeter Be- oder Entlüftungskanal durch das Ventilglied, insbesondere dessen Verschlussglied, verschlossen werden. Bei einer bevorzugten Ausführung der Erfindung ist die Kernstruktur mit dem sich axial durch den Spulenkanal erstreckenden Innenkern ausgebildet, der bezüglich eines die Spule umgebenden außenhülsenförmigen Mantel durch einen ringförmigen Freiraum strukturell getrennt ist, in dem die Spule angeordnet ist. Die Magnetfeldlinien des Magnetfelds, das jenseits der Stirnwand der Kernstruktur angeordnet ist, werden über den Innenkern hin zu dem Ventilglied geleitet. Der Innenkern kann insbesondere ein das ventilgliedseitige Spulenende überragendes Gegenprallstück aufweisen, gegen das das Ventilglied, das entgegen der Federspannung betätigt wird, stoßen kann, um eine definierte Axialposition zu erreichen. Vorzugsweise ist in dem Innenkern der Kernstruktur ein Be- und Entlüftungskanal ausgebildet, der wiederum von dem Ventilglied verschlossen und freigegeben werden kann.

Bei einer Weiterbildung der Erfindung ist das Ventilglied, insbesondere das Prallglied, in eine Verschluss- oder Freigabestellung gezwungen, insbesondere durch ein Federelement vorgespannt. Vorzugsweise ist das Federelement eine Druckfeder, die sich insbesondere an der Kernstruktur und dem Ventilglied abstützt. Dabei können die elektropneumatische Stelleinrichtung und die magnetische Ventilgliedbetätigung zum Bewegen des Ventilglieds entgegen der das Ventilglied in Zwangsstellung verbringenden Zwangskraft insbesondere des Federelements wirken. Vorzugsweise ist die Stellkraftrichtung der elektropneumatischen Stelleinrichtung und der weiteren Ventilgliedbetätigung gleichgerichtet.

Bei einer bevorzugten Ausführung der Erfindung ist das Ventilglied, das vorzugsweise aus einer Prallplatte mit einer eingepressten Kugel besteht, in einem Spaltraum mit einer axialen Spaltgröße von wenigen Millimetern angeordnet, der vorzugsweise als Hohlraum ausgebildet sein soll. Der Hohlraum ist einerseits von dem Magnetventilgehäuse andererseits von der Kernstruktur axial begrenzt. Der Hohlraum lässt eine axiale maximale Bewegungsamplitude von vorzugsweise wenigen Millimetern, insbesondere kleiner als 1 cm oder 2 cm, des Ventilglieds zu, insbesondere lotrecht zu einer Prallventilplatte. Der Hohlraum soll einerseits von einer Kernstruktur eines Stators der elektromagnetischen Stelleinrichtung andererseits von einer Gehäusewand begrenzt sein. Dabei kann ein Be- oder Entlüftungskanal in der Kernstruktur und ein Ent- oder Belüftungskanal in der Magnetventilgehäusewand ausgebildet sein.

Das Ventilglied schließt in einer ersten Betriebsstellung den Be- und Entlüftungskanal in der Kernstruktur oder gibt diesen frei. In einer zweiten, dazu axial versetzten Betriebsstellung des Prallventilglieds gibt dasselbe Verschleißglied den Ent- und Belüftungskanal in dem Magnetventilgehäuse frei oder schließt diesen, um die beiden grundsätzlichen Magnetventilschaltzustände, Belüftung oder Entlüftung, einzunehmen. Selbstverständlich sei klar, dass im Belüftungsschaltzustand unterschiedliche Belüftungsgradienten eingestellt werden können.

Bei der Erfindung ist eine Sicherheitseinrichtung mit einem elektronischen Warnsignalgeber vorgesehen, welche den Aktivierungsmechanismus ausschaltet, wenn die elektromagnetische Stelleinrichtung betrieben ist, insbesondere deren Spule bestromt ist. Zusätzlich kann die Sicherheitseinrichtung einen Positionssensor umfassen, der die Position des Magnetfelds relativ zu dessen aktiver Betriebsposition erfasst und feststellt, ob beispielsweise ein Dauermagnet im Bereich des Ventilglieds angeordnet ist, um die Ventilgliedbetätigung zu veranlassen. Alternativ oder zusätzlich kann ein Magnetfeldsensor im Bereich der elektromagnetischen Stelleinrichtung und/oder des Ventilglieds vorgesehen sein, der das Vorliegen oder Nichtvorliegen eines zulässigen oder unzulässigen Magnetfelds der Ventilgliedbetätigung erfasst. Der jeweilige Sensor kann mit einem elektronischen Logikbauteil verbunden sein, das anhand von Erfahrungs- oder Kalibrierungs- oder Softwarewerten feststellt, ob das Magnetfeld das betriebsgemäße Magnetfeld ist oder falsche oder ungewollte Magnetfeldeinflüsse vorliegen. Das Logikbauteil kann ein Warnsignal ausgeben oder direkt mit einem Stellungsregler verbunden sein, um eine Notschaltposition zu veranlassen.
Des Weiteren betrifft die Erfindung ein elektropneumatisches Feldgerät, wie einen Stellungsregler oder einen pneumatischen Stellantrieb, einer prozesstechnischen Anlage. Das erfindungsgemäße elektropneumatische Feldgerät hat wenigstens ein erfindungsgemäßes elektropneumatisches Magnetventil.
Weitere bevorzugte Ausgestaltungen der Erfindung sind in den Unteransprüchen angegeben. Weitere Eigenschaften, Vorteile und Merkmale der Erfindung werden durch die folgende Beschreibung bevorzugter Ausführungen der Erfindung deutlich, in denen zeigen:
- Fig. 1: eine Querschnittsansicht eines erfindungsgemäßen Magnetventils, bei dem ein Dauermagnet in einem Passivbetriebszustand ist;
- Fig. 2: eine Querschnittsansicht des Magnetventils gemäß Fig. 1, bei dem ein Dauermagnet in einem Aktivbetriebszustand ist;
- Fig. 3: eine Querschnittsansicht einer weiteren Ausführung des erfindungsgemäßen Magnetventils, wobei ein Dauermagnet in dem Passivbetriebszustand ist;
- Fig. 4: eine Querschnittsansicht der Ausführung nach Fig. 3, bei der ein Dauermagnet in einem Aktivbetriebszustand ist;
- Fig. 5: eine Querschnittsansicht einer noch weiteren Ausführung des erfindungsgemäßen Magnetventils, bei dem ein Dauermagnet in dem Passivbetriebszustand ist;
- Fig. 6: eine Querschnittsansicht der Ausführung nach Fig. 5, bei der ein Dauermagnet in einem Aktivbetriebszustand ist;
- Fig. 7: eine Detailansicht des Magnetventils im Bereich der beweglich gelagerten Ventilprallplatte; und
- Fig. 8: eine Querschnittsansicht der Ausführung nach Fig. 1, wobei Magnetfeldlinien zur Verdeutlichung der Wirkung des Aktivierungsmechanismus für einen Dauermagneten angedeutet sind.

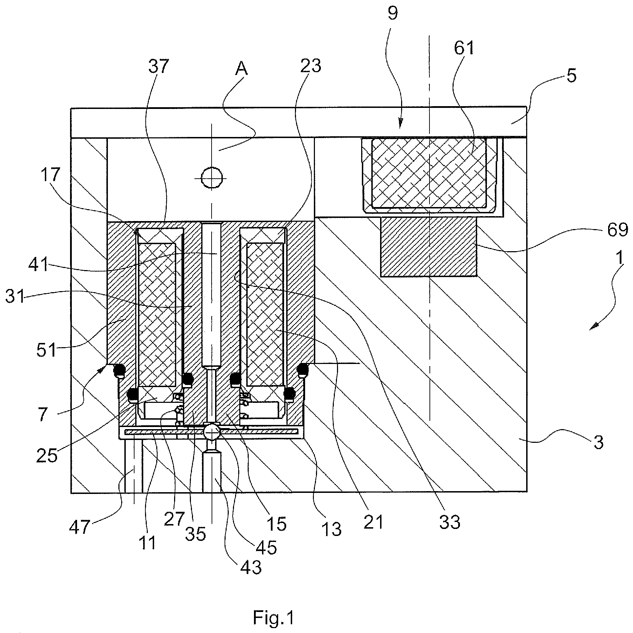

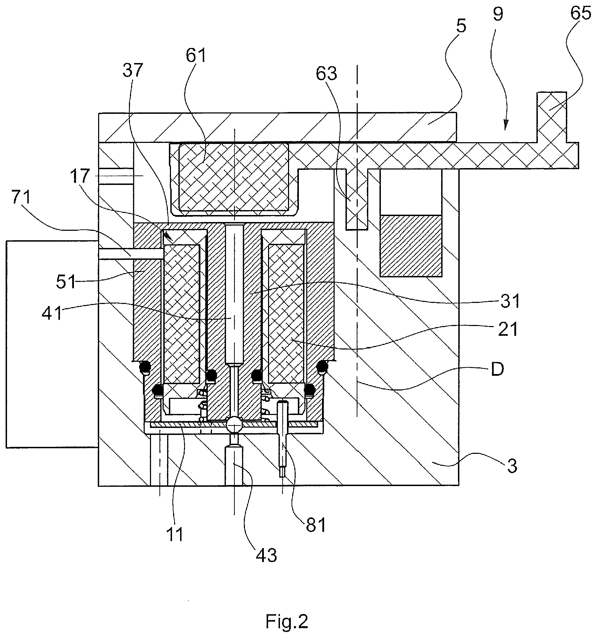

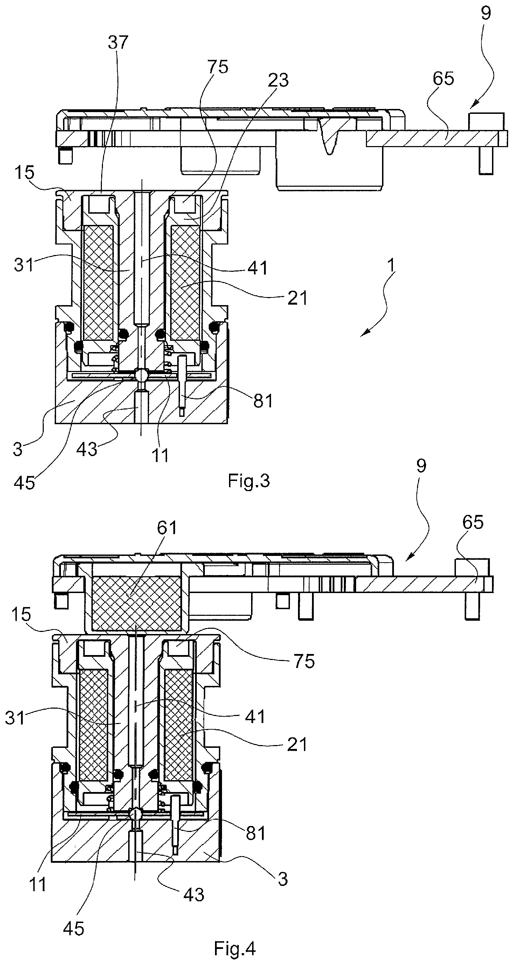

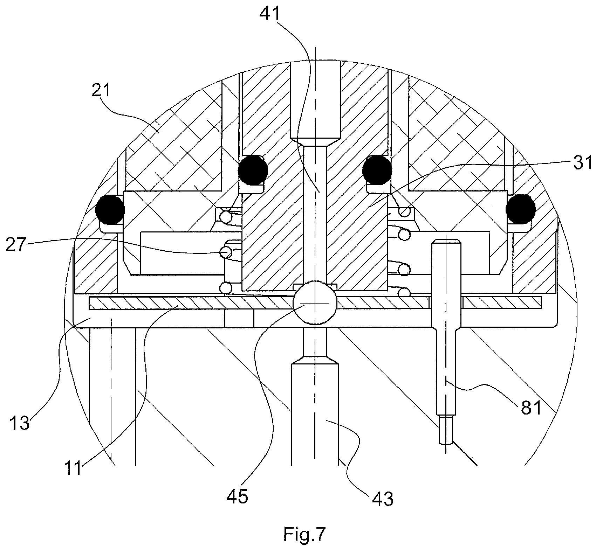

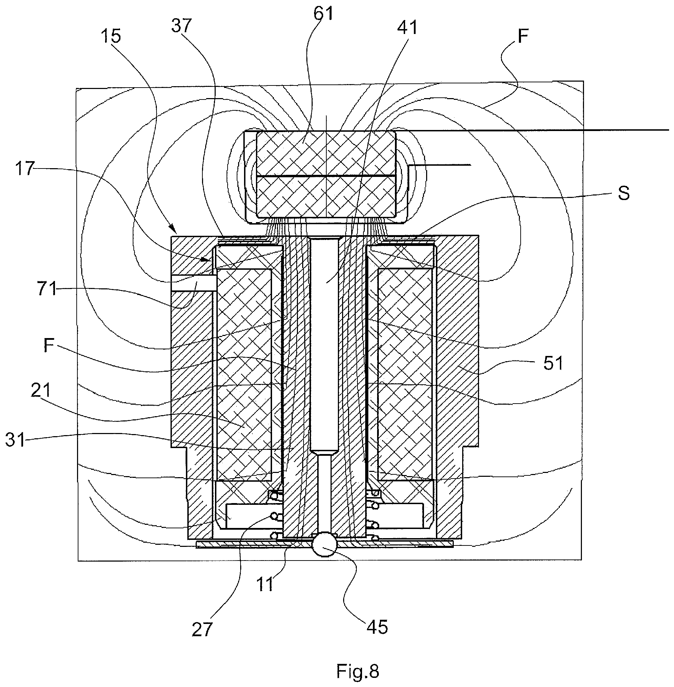

In Fig. 1 und 2 in Verbindung mit Fig. 7, welche auch repräsentativ für die Ausführungen der Fig. 3, 4 und 5, 6 ist, ist eine Ausführung eines erfindungsgemäßen elektropneumatischen Magnetventils im Allgemeinen mit der Bezugsziffer 1 versehen. Das erfindungsgemäße Magnetventil 1 hat neben einer elektromagnetischen Stelleinrichtung 7 eine zusätzliche manuell zu betätigende Ventilgliedbetätigung 9, die gegenüber der elektromagnetischen Stelleinrichtung eigenständig arbeitet und betrieben ist. Die Ventilgliedbetätigung ist magnetisch und erzeugt magnetisch Stellkräfte zum Verlagern des Ventilglieds 11 des Magnetventils 1. Die Ventilgliedbetätigung 9 hat ein Magnetfeld, das im Detail in Fig. 8 durch Magnetfeldlinien angedeutet ist, und einen Aktivierungsmechanismus, der auf unterschiedliche Weise in den im Folgenden beschriebenen Ausführungen realisiert ist.

Das Magnetventil 1 umfasst ein schematisch dargestelltes Gehäuse 3, an dem drehbar ein Deckel 5 festgelegt ist.

In dem Gehäuse 3 ist eine elektromagnetische Stelleinrichtung 7 ortsfest angeordnet. Ein in Axialrichtung A verfahrbares Ventilglied ist eine Prallplatte 11, die in einem Spaltraum 13 beweglich gelagert, der einerseits von einer Innenseite des Gehäuses 3 und andererseits von einer stationären weichmagnetischen Kernstruktur 15 begrenzt ist. Die Lagerung der Prallplatte 11 in axialer Richtung A wird mittels wenigstens einem Führungsstift 81 realisiert, der unter Ausbildung einer Spielpassung mit einem Loch in der Prallplatte 11 führend zusammenwirkt. Alternativ kann der Führungsstift vollständig entfallen. Die Kernstruktur 15 kapselt im Wesentlichen vollständig eine Spuleneinrichtung 17 mit einer umlaufenden Ringspule 21 und einen die Spule 21 radial innen und an den Axialenden umgreifenden Spulenmantel 23 (Wickelkörper), insbesondere aus nicht-metallischem Material ein. In dem Außenmantel 51 der Kernstruktur 15 ist ein Zugriffskanal 71 ausgebildet, durch den elektrische Leitungen zum Bestromen der Spulen 21 verlaufen können.

An einem der Prallplatte 11 zugewandten Axialende 25 der Spulenummantelung stützt sich eine Druckfeder 27 ab und wirkt auf die Prallplatte 11, um sie in eine Zwangsposition zu drängen.

Die Kernstruktur 15 und die Spuleneinrichtung 17 bilden den Aktor der elektromagnetischen Stelleinrichtung 7. Die Kernstruktur 15 umfasst einen Innenkern 31, der sich durch einen Spulenkanal 33 der Ringspule 21 in Axialrichtung A vollständig hindurch erstreckt, und zwar von einem Prallende 35 des Innenkerns 31 hin zu einer von der Prallplatte 11 abgewandten voll umschließenden radialen Stirnendwand 37. Der Innenkern 31 begrenzt koaxial zur Axialrichtung A einen Entlüftungskanal 41, der auf Atmosphäre liegt und in den Spaltraum 13 mündet. Die Spuleneinrichtung 17 wird von der Kernstruktur 15 radial außen vollständig umgeben, so dass für die insbesondere zylindrische Ringspule 21 ein formkomplementär ausgebildeter insbesondere zylindrischer Ringraum realisiert ist, in dem die Spuleneinrichtung 17 insbesondere von der Prallplattenseite eingesetzt und über Dichtringe abgedichtet ist.

Wie in Fig. 1 ersichtlich ist, münden zwei weitere Kanäle in den Spaltraum 13, in dem die Prallplatte 15 beweglich gelagert ist. Ein Belüftungskanal 43 liegt koaxial zur Axialrichtung A und mündet dort in den Spaltraum 13, in dem ein kugelförmiges Verschlussglied 47 befestigt an der Prallplatte 15 ebenfalls auf der Axialrichtungsachse A liegend angeordnet ist. In einer Entlüftungsstellung verschließt das Verschlussglied 45 das Mündungsende des Belüftungskanals 43, während in einer Belüftungsstellung das Verschlussglied 45 den Belüftungskanal 43 freigibt, aber den Entlüftungskanal 41 verschließt, was in Fig. 7 dargestellt ist.

Der weitere erwähnte Kanal ist ein Ausgangskanal 47, der mit einem nicht näher dargestellten pneumatisch betriebenen Feldgerät, wie einem pneumatischen Antrieb mittels pneumatischen Leitungen angeschlossen ist. Wie in den Figuren dargestellt ist, mündet auch der Ausgangskanal 47 in den Spaltraum 13, so dass je nach Stellung der Prallplatte 11 oder deren Verschlussglied 45 des Ausgangskanals 47 mit dem Belüftungskanal 43 oder mit dem Entlüftungskanal 41 pneumatisch gekoppelt ist.

Beide Kanäle, der Belüftungskanal 43 sowie der Ausgangskanal 47, sind in der Struktur des Magnetventilgehäuses 3 eingebracht. Der Ausgangskanal 47 ist unabhängig von der Stellung der Prallplatte 11 stets geöffnet.

Wie in Fig. 1 und 2 deutlich ersichtlich ist, ist die von der Prallplatte 11 distal liegende Stirnendwand 37 bezüglich deren axialen Stärke deutlich schmäler als die Radialseite des Innenkerns 31 oder des Außenmantels 51 der Kernstruktur 15 ausgebildet ist. Die Stärke (Querschnittsfläche) der Stirnendwand 37 soll nicht kleiner werden als der kleinste Querschnitt der Prallplatte 11. Alternativ oder zusätzlich dazu kann die axiale Stärke der Stirnendwand 37 deutlich kleiner als 1 cm, vorzugsweise kleiner als 5 mm, 2 mm oder 1 mm gebildet sein. Die Stirnendwand 37 ist vorzugsweise die schmälste Wandseite der die Spuleneinrichtung 17 aufnehmenden Kernstruktur 15.

Wie oben angedeutet ist, umfasst die erfindungsgemäße Ventilgliedbetätigung ein Magnetfeld, das das Ventilglied unabhängig von der elektromagnetischen Stelleinrichtung betätigen soll. Zur Bildung des Magnetfelds kann ein Dauermagnet oder Elektromagnet herangezogen werden. Bei den in den Figuren dargestellten Ausführungen ist ein Dauermagnet 61 vorgesehen.

Das Magnetfeld kann aktiv mittels einer magnetventilautarken Energieversorgung aktiviert und deaktiviert werden, was allerdings hier nicht näher in den Figuren dargestellt ist.
Der Dauermagnet 61 hat bei der Ausführung gemäß Fig. 1 und 2 zwei Betriebszustände oder Schaltpositionen, nämlich einen passiven Betriebszustand, der in Fig. 1 dargestellt ist, und einen aktiven Betriebszustand, der in Fig. 2 dargestellt ist. Um den Dauermagneten 61 von der Passivposition (Fig. 1) in die Aktivposition (Fig. 2) zu verbringen, ist eine Dreh- oder Schwenkmechanik insbesondere zwischen dem Deckel 5 und dem Magnetventilgehäuse 3 angeordnet. Die Drehmechanik ist an dem Magnetventilgehäuse 3 über einen Zapfen 63 schwenkbar gelagert und umfasst einen Hebelarm 65, über den die Drehmechanik manuell betätigt werden kann und der Dauermagnet 61 um eine Drehachse D verschwenkt werden kann, die in Radialrichtung versetzt parallel zur Axialrichtung A liegt. Um den Dauermagneten 61 in der Passivposition (Fig. 1) festzulegen, liegt dieser einem weichmagnetischen Fixierelement 69 gegenüber, wodurch der Dauermagnet 61 unter Einfluss seiner magnetischen Anziehkräfte in der Position gehalten wird. Diese Haltekräfte können einfach über den Hebelarm 65 überwunden werden, um den Dauermagneten 61 in die Aktivposition zu verschwenken, die in Fig. 2 dargestellt ist. In dieser Aktivposition liegt der Dauermagnet 61 diametral auf der gegenüberliegenden Seite der Prallplatte 11 in axialer Nachbarschaft der geschwächten Stirnendwand 37 der Kernstruktur 15. In dieser Aktivposition ist der Dauermagnet 61 "aktiviert oder aktiv geschaltet" und betätigt magnetisch berührungslos die Prallplatte 11, indem sie von der magnetisierten Kernstruktur 15 insbesondere von dem Innenkern 31 angezogen wird, wie in Fig. 2 und 7 angedeutet ist.
Es ist insbesondere die erfindungsgemäße Ausgestaltung der Stirnendwand 37 mittels einer Materialschwächung gegenüber der Materialstärke des Außenmantels 51 und des Innenkerns 31, welche eine magnetische Sättigung S (Fig. 8) im Bereich der dünnen Stirnendwand 37 verursacht. Die magnetische Sättigung S bewirkt eine Bündelung der Feldlinien F in den Innenkern 31 der Kernstruktur 15 und leitet die magnetischen Kräfte konzentriert parallel zur Axialrichtung A hin zur Prallplatte 11, um diese anzuziehen und somit den Entlüftungskanal 41 zu schließen.
Mit der erfindungsgemäßen Maßnahme eines beweglichen Dauermagneten 61, der von einem aktiven Betriebszustand in einen passiven Betriebszustand (von Fig. 1 in Fig. 2) verbringbar ist mittels eines als Drehmechanismus ausgebildeten Aktivierungsmechanismus ist es möglich, eine dem tatsächlichen Betrieb des Magnetventils sehr ähnliche überprüfbare Betriebssituation zu schaffen, über die die Funktionsweise des Magnetventils insbesondere dessen Mechanik überprüft werden kann. Bei dem geschlossenen Belüftungskanal kann eine gewünschte Belüftung des pneumatischen Ausgangskanals 47 einhergehen und überprüft werden. Dabei muss allerdings nicht die elektromagnetische Stelleinrichtung selbst herangezogen werden, so dass aufwändige elektrische Anschlussarbeiten nicht notwendig sind. Eine einfache manuelle Betätigung der Dreheinrichtung ist notwendig, um die Funlctionsweise des Magnetventils 1 zu überprüfen.

Es sei klar, dass in der Aktivposition gemäß Fig. 2 eine Anschlagsfunktion vorgesehen ist, um eine definierte Positionierung des Dauermagneten 61 relativ zu der Spuleneinrichtung 17 und insbesondere zur Kernstruktur 15 zu bilden, deren besondere Gestaltung dafür verantwortlich ist, ausreichend große magnetische Betätigungskräfte an der Prallplatte 11 wirken zu lassen, um deren Funktionsweise zu überprüfen.

Bei der in Fig. 1 und 2 dargestellten Ausführung ist der Aktivierungsmechanismus als eine Art Schalteinrichtung mit zwei Schaltpositionen ausgeführt, die in Fig. 1 und 2 angedeutet sind.

Eine zu den Ausführungen gemäß Fig. 1, 2 und 8 ähnliche Ausführung des elektropneumatischen Magnetventils gemäß der Erfindung ist in Fig. 3 und 4 dargestellt, wobei für gleiche und ähnliche Bestandteile des Magnetventils 1 die gleichen Bezugsziffern verwenden werden. Das Magnetventil 1 unterscheidet sich von der Ausführung nach Fig. 1, 2 und 8 im Wesentlichen in der Gestaltung der Kernstruktur 15, welche ebenfalls eine schmale Stirnendwand 37 aufweist. Die Spuleneinfassung ist ein Spritzgussteil aus einem nicht leitenfähigen Material und hat eine Ringaussparung 75. Die Ringaussparung 75 dient dazu, Steckerelemente zum axialen Anschließen der Spule aufzunehmen. Eine magnetische Sättigung wird an der schmalen Stirnendwand 37 erreicht. Die magnetische Sättigung könnte alternativ auch durch eine in der Stirnendwand 37 eingebildete Aussparung oder Ringnut gebildet sein, mit der die gewünschte Materialschwächung erzielt werden kann. Auf diese Weise führt es an der schmalen Stirnendwand zu einer Konzentration des Feldlinienverlaufs innerhalb des Innenkerns 31, sobald sich der Dauermagnet 61 in der Aktivposition befindet, die in Fig. 4 dargestellt ist.

In beiden Ausführungen gemäß Fig. 1, 2, 8 und 3 und 4 ist für die translatorische Bewegung der Prallplatte zwischen der Verschlussstellung des Belüftungskanals 43 und der Verschlussstellung des Entlüftungskanals 41 eine Führungseinrichtung vorgesehen, welche durch den Führungsstift 81 realisiert ist, längs die bewegliche Prallplatte mittels Ausbildung einer Übergangs- oder Spielpassung geführt ist.

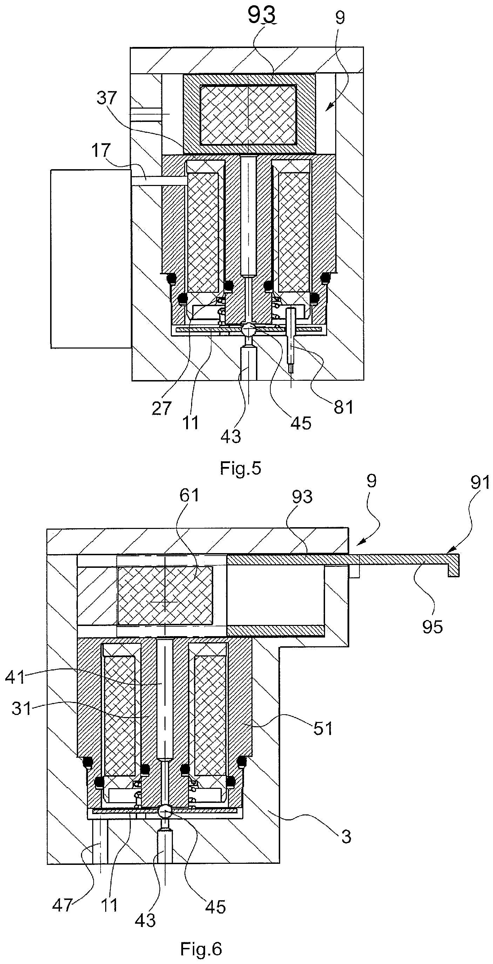

Eine weitere Ausführung des erfindungsgemäßen elektropneumatischen Magnetventils 1 ist in Fig. 5 und 6 dargestellt, wobei für identische und ähnliche Bestandteile der oben beschriebenen Ausführungen die gleichen oder ähnliche Bezugszeichen verwendet werden. Bei der Ausführung gemäß Fig. 5 und 6 ist der Dauermagnet 61 nicht dadurch aktivierbar, dass er von einer Aktivposition in eine Passivposition verfahren wird, insbesondere verschwenkt wird, sondern der Dauermagnet 61 ist, wie in Fig. 5 und 6 ersichtlich ist, ortsfest zum Magnetventilgehäuse 3 angeordnet. Das elektropneumatische Magnetventil 1 hat nichtsdestotrotz einen Aktivierungsmechanismus, der als Magnetfeldabschirmung 91 ausgeführt ist, welche durch eine Kapselung 93 insbesondere aus ferritischem Material und einem insbesondere einstückig damit ausgebildeten Schiebehebel 95 realisiert sein kann. Die Kapselung 93 kann aus Metall sein und soll den Dauermagneten 61 insbesondere auf dessen der elektromagnetischen Stelleinrichtung 7 zugewandten Seite vollständig bedecken. Lediglich auf einer Seite des Dauermagneten 61, über die die Abschirmung über den Dauermagneten 61 aufgeschoben oder gestülpt wird, kann der Dauermagnet 61 frei bleiben. In Fig. 5 ist der Passivbetriebszustand des Dauermagneten 61 dargestellt, da die ferritringartige Kapselung 93 den Dauermagneten 61 umgibt, so dass magnetische Wirkung, insbesondere magnetische Wirkung im Bereich der Stirnendwand 37, keine Entfaltung findet. Die Prallplatte 11 wird nicht magnetisch angezogen, so dass die Druckfeder 27 die Prallplatte 11 gegen das Magnetventilgehäuse 3 drückt und das Verschlussglied 45 den Belüftungskanal 43 pneumatisch abschließt.

Wird der Schiebehebel 95 insbesondere manuell betätigt, indem er in Radialrichtung (senkrecht zur Axialrichtung A) herausgezogen wird, wird die Abschirmung 93 von dem Dauermagneten 61 abgezogen, wodurch der Dauermagnet 61 seinen magnetischen Einfluss wirken lassen kann und eine magnetische Sättigung erreicht wird, wie sie in Fig. 8 angedeutet ist. Auf diese Weise wird die Prallplatte 11 von dem magnetisierten Innenkern 31 angezogen, wodurch der Lüftungskanal 41 geschlossen wird. Durch manuelles einfaches Hin- und Herbetätigen der Magnetfeldabschirmung 91 kann der Dauermagnet 61 von dessen Passivbetriebszustand in den Aktivbetriebszustand und umgekehrt versetzt werden.

Die Ausführung nach Fig. 5 und 6 ist insofern auch von Vorteil, dass der Dauermagnet 61 aufgrund der Abschirmung 91 in dem Passivbetriebszustand, der den eigentlichen Normalbetriebszustand des elektropneumatischen Magnetventils 1 sein soll, nicht andere elektrische Bauteile, wie einen Mikrochip, magnetisieren und negativ beeinflussen kann.

Ist der Dauermagnet 61 deaktiviert, bedeutet es, dass die Abschirmung 93 den Dauermagneten 61 umgibt oder der Dauermagnet 61 in die Passivposition verschwenkt ist. Das Magnetventil ist in die Betriebsstellung geschaltet. Die Spule 21 kann bestromt werden, wodurch die Prallplatte 11 gemäß des Normalbetriebs des Magnetventils 1 angezogen wird. Der Entlüftungskanal 41 wird verschlossen und der Belüftungskanal 43 ist für Zuluft offen. Es besteht eine pneumatische Verbindung zwischen dem Belüftungskanal 43 und dem Ausgangskanal 47. Wird im Gegensatz dazu die Spule 21 nicht bestromt, wird die Prallplatte 11 unter dem Einfluss der Druckfeder 27 gegen den Sitz an der Magnetgehäuseseite gedrückt, wodurch der Belüftungskanal 43 geschlossen wird. Es besteht dann eine pneumatische Verbindung zwischen dem Ausgangskanal 47 und dem Entlüftungskanal 41. Das Magnetventil ist in den Belüftungszustand geschaltet.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: elektropneumatisches Magnetventil
- 3: Magnetventilgehäuse
- 5: Deckel
- 7: elektromagnetische Stelleinrichtung
- 9: Ventilgliedbetätigung
- 11: Prallplatte
- 13: Spaltraum
- 15: Kernstruktur
- 17: Spuleneinrichtung
- 21: Ringspule
- 23: Spulenmantel
- 25: Axialende
- 27: Druckfeder
- 31: Innenkern
- 33: Spulenkanal
- 35: Prallende
- 37: Stirnendwand
- 41: Entlüftungskanal
- 43: Belüftungskanal
- 45: Verschlussglied
- 47: Ausgangskanal
- 51: Außenmantel
- 61: Dauermagnet
- 63: Zapfen
- 65: Hebelarm
- 69: Fixierelement
- 71: Zugriffskanal
- 75: Ringaussparung
- 83: Stift
- 91: Magnetfeldabschirmung
- 93: Kapselung
- 95: Schiebehebel

- A: Axialrichtung
- S: magnetische Sättigung

## Patentansprüche

1. Elektropneumatisches Magnetventil (1) für ein pneumatisch betriebenes Feldgerät einer prozesstechnischen Anlage, wie einer chemischen Anlage, einer petrochemischen Anlage, einer Lebensmittel verarbeitenden Anlage, wie einer Brauerei, einer Kernkraftwerkanlage oder dergleichen, umfassend:
- ein Ventilglied, das zum Be- und/oder Entlüften eines Magnetventilausgangs zwischen wenigstens zwei Betriebsstellungen verfahrbar ist;
- eine elektromagnetische Stelleinrichtung (7) zum Verfahren des Ventilglieds zwischen den wenigstens zwei Betriebsstellungen; und
- eine gegenüber der elektromagnetischen Stelleinrichtung (7) zusätzliche magnetische Ventilgliedbetätigung (9) ebenfalls zum Verfahren des Ventilglieds unabhängig von einer Betätigung der elektromagnetischen Stelleinrichtung (7);
wobei die Ventilgliedbetätigung (9) ein Magnetfeld zum berührungslosen Betätigen des Ventilglieds und einen Aktivierungsmechanismus aufweist, durch den die Ventilgliedbetätigung zwischen einem Passivbetriebszustand, in dem das Ventilglied aufgrund der Ventilgliedbetätigung unbewegt bleibt, und einem Aktivbetriebszustand verbringbar ist, in dem das Ventilglied unter den Einfluss des Magnetfelds aus einer der Betriebsstellungen verfahren wird, **dadurch gekennzeichnet, dass**
eine Sicherheitseinrichtung mit einem elektronischen Warnsignalgeber vorgesehen ist, welche den Aktivierungsmechanismus ausschaltet, wenn die elektromagnetische Stelleinrichtung (7) betrieben ist.

2. Elektropneumatisches Magnetventil (1) nach Anspruch 1, bei dem das Magnetfeld durch einen Dauermagneten (61) gebildet ist, der aus einem hartmagnetischen Material gebildet ist und/oder ein statisches Magnetfeld erzeugt, wobei der Aktivierungsmechanismus dem Dauermagneten (61) derart zugeordnet ist, dass der Dauermagnet (61) zwischen seinem Passivbetriebszustand und Aktivbetriebszustand verbracht werden kann.

3. Elektropneumatisches Magnetventil (1) nach Anspruch 1 oder 2, bei dem der Aktivierungsmechanismus eine Verlagerungseinrichtung zum Bewegen des Magnetfelds relativ zum Ventilglied umfasst, wobei die Verlagerungseinrichtung wenigstens eine Verlagerungsendpositionfestlegt, wobei in einer Verlagerungsendposition das Magnetfeld das Ventilgliedverfährt.

4. Elektropneumatisches Magnetventil (1) nach Anspruch 3, wobei die Verlagerungseinrichtung eine Schwenkachse umfasst, um die das Magnetfeld bezüglich der wenigstens einen Verlagerungsendposition schwenkbar ist.

5. Elektropneumatisches Magnetventil (1) nach Anspruch 3 oder 4, wobei die Verlagerungseinrichtung eine Magnetfeldführung umfasst, die das Magnetfeld translatorisch oder rotatorischführt.

6. Elektropneumatisches Magnetventil (1) nach einem der Ansprüche 3 bis 5, wobei die Verlagerungseinrichtung zwei Verlagerungsendpositionen festlegt, zwischen denen das Magnetfeld verlagert werden kann, wobei insbesondere die Verlagerungseinrichtung einen Bewegungsanschlag zum Festlegen der jeweiligen Verlagerungsendposition aufweist, wobei der Bewegungsanschlag durch ein zusätzliches, weichmagnetisches oder dauermagnetisches Bauteil gebildet ist, wobei das zusätzliche Bauteil an einem Magnetventilgehäuse angebracht ist.

7. Elektropneumatisches Magnetventil (1) nach einem der vorstehenden Ansprüche, bei dem der Aktivierungsmechanismus eine Magnetfeldabschirmung (91) zum Blockieren und/oder Ablenken des Magnetfeldes umfasst, die derart dem Magnetfeld zugeordnet ist, dass es für den Passiv- oder Aktivbetriebszustand gegenüber dem Ventilglied blockiert und/oder umgelenkt wird, wobei in dem Passivbetriebszustand die Magnetfeldabschirmung (91) das Magnetfeld gegenüber dem Ventilglied derart abschirmt und/oder umlenkt, dass eine Bewegung des Ventilglieds unter dem Einfluss des Magnetfeldes verhindert wird, und in dem Aktivbetriebszustand die Magnetfeldabschirmung das Magnetfeld derart unbeeinflusst lässt oder hin zum Ventilglied umlenkt, dass das Ventilglied unter dem Einfluss des Magnetfeldes bewegt wird.

8. Elektropneumatisches Magnetventil (1) nach Anspruch 7, bei dem die Magnetfeldabschirmung gegenüber dem Magnetfeld beweglich ist und/oder eine einem Magnetfelderzeugung benachbarte Aufnahme für die Magnetfeldabschirmung (91) vorgesehen ist, in der die Magnetfeldabschirmung (91) an dem Magnetventil (1), an der Außenseite eines Magnetventilgehäuses (3), fest angebracht ist, wobei beim Belegen der Aufnahme mit der Magnetfeldabschirmung (91) der Passivbetriebszustand erreicht ist und bei Freigabe der Aufnahme durch Entfernen der Magnetfeldabschirmung (91) der Aktivbetriebszustand erreicht ist.

9. Elektropneumatisches Magnetventil (1) nach Anspruch 7 oder 8, bei dem die Magnetfeldabschirmung (91) mit einer Führungseinrichtung kombiniert ist, durch die die Magnetfeldabschirmung (91) von einer Verstauungsposition in eine Abschirmposition bewegt ist, in der das Magnetfeld in dessen Passivbetriebszustand versetzt wird, und/oder bei dem eine Verstauungsposition für die Magnetfeldabschirmung (91) vorgesehen ist, wobei die Verstauungsposition von einer Abschirmposition, in der das Magnetfeld in den Passivbetriebszustand versetzt wird, entfernt ist und/oder in der Verstauungsposition das Magnetfeld im Wesentlichen unbeeinflusst ist.

10. Elektropneumatisches Magnetventil (1) nach einem der vorstehenden Ansprüche, bei dem die elektropneumatische Stelleinrichtung eine Spule (21) mit einem von der Spule (21) umgebenden Spulenkanal (33) und eine die Spule (21) axial und radial umgebende, weichmagnetische Kernstruktur (15) aufweist, wobei die Spule (21) und die Kernstruktur (15) den magnetischen Aktor der elektromagnetischen Stelleinrichtung (7) bilden und/oder gegenüber einem Magnetventilgehäuse (3) ortsfest angebracht sind.

11. Elektropneumatisches Magnetventil (1) nach Anspruch 10, bei dem die Kernstruktur (15) eine dauermagnetseitige, das Axialende der Spule (21) bedeckende Stirnendwand (37) formt, wobei eine Materialschwächung an der Stirnendwand (37) oder die die Materialschwächung definierende Kernstruktur (15) dazu ausgelegt sind, dass im Aktivbetriebszustand Magnetfeldlinien des Magnetfelds wegen einer magnetischen Sättigung im Bereich der geschwächten Stirnendwand (37) hin zu dem Ventilglied umgelenkt werden, so dass im Aktivbetriebszustand das Ventilglied entgegen einer das Ventilglied vorspannenden Feder hin zu der ventilgliedseitigen Stirnendwand (37) der Kernstruktur (15) magnetisch angezogen wird, um einen in der Kernstruktur (15) ausgebildeten Be- oder Entlüftungskanal (41, 43) durch das Ventilglied, dessen Verschlussglied, zu verschließen, wobei die Kernstruktur (15) mit einem sich axial durch den Spulenkanal (33) erstreckenden Innenkern (31) ausgebildet ist, an dem ein über das ventilgliedseitige Spulenende axial hinaus entsprechendes Gegenprallstück (35) anschließt, wobei ein Be- oder Entlüftungskanal (41, 43) in dem Innenkern (31) ausgebildet ist und das Ventilglied den Be- oder Entlüftungskanal (41, 43) verschließen und freigeben kann.

12. Elektropneumatisches Magnetventil (1) nach einem der vorstehenden Ansprüche, bei dem das Ventilglied als beweglich gelagertes Prallglied (11) ausgebildet ist und/oder mit einem axial vorstehenden, einen Luftkanal freigebenden oder belegenden Verschlussglied (45) ausgebildet ist, wobei das Ventilglied bezüglich einer Spulenachse axial von dem Spulenende versetzt angeordnet ist, wobei an einem dem ventilgliedseitigen Spulenende diametral gegenüberliegenden Spulenende das Magnetfeld ortsfest angeordnet ist, eine Verlagerungsendposition des beweglichen Magnetfelds vorgesehen ist.

13. Elektropneumatisches Magnetventil (1) nach einem der Ansprüche 10 bis 12 wenn abhängig von Anspruch 10, bei dem das als beweglich gelagertes Prallglied (11) ausgebildetes Ventilglied, in eine Verschluss- oder Freigabestellung gezwungen, durch ein Federelement vorgespannt, ist, wobei die elektromagnetische Stelleinrichtung (7) und die Ventilgliedbetätigung (9) zum Bewegen des Ventilglieds entgegen der das Ventilglied in die Zwangsstellung bringenden Zwangskraft wirken, wobei das Ventilglied in einem Hohlraum beweglich, translatorisch lotrecht zu einer Ventilprallplatte (11) geführt ist, wobei der Hohlraum einerseits von der Kernstruktur (15) eines Stators der elektromagnetischen Stelleinrichtung, andererseits von einer Gehäusewand gebildet ist, wobei ein Be- oder Entlüftungskanal (41, 43) in der Kernstruktur (15) und ein Be- oder Entlüftungskanal (41, 43) in der Magnetventilgehäusewand ausgebildet sind, wobei das Ventilglied in einer ersten Betriebsstellung den Be- oder Entlüftungskanal (41, 43) in der Kernstruktur (15) schließt oder freigibt und in einer zweiten Betriebsstellung den Be- oder Entlüftungskanal (41, 43) in der Magnetventilgehäusewand schließt oder freigibt, wobei ein Ausgangskanal (47) für das Magnetventil (1) vorgesehen ist, der in den Prallspaltraum mündet und/oder in dem Magnetventilgehäuse (3) ausgebildet ist.

14. Elektropneumatisches Magnetventil (1) nach einem der vorstehenden Ansprüche, bei dem die Sicherheitseinrichtung ein Positionssensor umfasst, der die Position des Magnetfelds und/oder einer Magnetfeldabschirmung relativ zu dessen aktiver Betriebsposition erfasst, und/oder ein Magnetfeldsensor im Bereich der elektromagnetischen Stelleinrichtung und/oder des Ventilglieds umfasst, der das Vorliegen oder Nichtvorliegen des Magnetfeldes der Ventilgliedbetätigung (9) erfasst.

15. Elektropneumatisches Feldgerät, pneumatischer Stellungsregler, pneumatischer Stellantrieb zum Betätigen eines Stellventils einer prozesstechnischen Anlage, umfassend ein nach einem der vorstehenden Ansprüche ausgebildetes elektropneumatisches Magnetventil (1).

## Claims

1. Electro-pneumatic solenoid valve (1) for a pneumatically operated field device of a process plant, such as a chemical plant, a petro-chemical plant, a food processing plant, such as a brewery, a nuclear power plant or the like, comprising:
- a valve member which can be moved between at least two operating positions for ventilating and/or exhausting a solenoid valve output;
- an electromagnetic actuator (7) for moving the valve member between the at least two operating positions;
- a solenoid valve member actuation (9) additional to the electromagnetic actuator (7) also for moving the valve member independently of an actuation of the electromagnetic actuator (7);
wherein the valve member actuation (9) comprises a magnetic field for contactless actuation of the valve member and an activation mechanism by means of which the valve member actuation (9) can be moved between a passive operating state in which the valve member remains stationary due to the valve member actuation (9) and an active operating state in which the valve member is moved under the influence of the magnetic field from one of the operating positions, **characterized in that** a safety device with an electronic warning signal generator is provided which switches off the activation mechanism when the electromagnetic actuator (7) is operated.

2. Electro-pneumatic solenoid valve (1) according to claim 1, wherein the magnetic field is formed by a permanent magnet (61) which is formed of a hard magnetic material and/or generates a static magnetic field, wherein the activation mechanism is associated with the permanent magnet (61) such that the permanent magnet (61) can be moved between its passive operating state and active operating state.

3. Electro-pneumatic solenoid valve (1) according to claim 1 or 2, wherein the activation mechanism comprises displacement means for moving the magnetic field relative to the valve member, the displacement means defining at least one displacement end position, wherein in a displacement position the magnetic field moves the valve member.

4. Electro-pneumatic solenoid valve (1) according to claim 3, wherein the displacement means comprises a pivot axis about which the magnetic field is pivotable with respect to the at least one displacement end position.

5. Electro-pneumatic solenoid valve (1) according to claim 3 or 4, wherein the displacement means comprises a magnetic field guidance which guides the magnetic field translatory or rotatory.

6. Electro-pneumatic solenoid valve (1) according to claim 3 to 5, wherein the displacement means defines two displacement end positions between which the magnetic field can be moved, the displacement means in particular having a movement stop for defining the respective displacement end position, wherein the movement stop is formed by an additional, soft-magnetic or permanent magnetic element, wherein the additional element is mounted on a solenoid valve housing.

7. Electro-pneumatic solenoid valve (1) according to one of the preceding claims, wherein the activation mechanism comprises a magnetic field shielding (91) for blocking and/or deflecting the magnetic field, the shield (91) is associated with the magnetic field in such a way that it is blocked and/or deflected with respect to the valve member for the passive or active operating state, wherein in the passive operating state the magnetic field shielding (91) shields and/or deflects the magnetic field from the valve member, that a movement of the valve member under the influence of the magnetic field is prevented, and in the active operating state, the magnetic field shielding (91) leaves the magnetic field unaffected or deflects it towards the valve member in such a way that the valve member is moved under the influence of the magnetic field.

8. Electro-pneumatic solenoid valve (1) according to claim 7, wherein the magnetic field shielding (91) is movable relative to the magnetic field and/or a receptacle for the magnetic field shielding (91), adjacent to a magnetic field generation, is provided, in which the magnetic field shielding (91) is fixedly attached to the solenoid valve (1), is fixedly attached to the outside of a solenoid valve housing (3), the passive operating state being reached when the magnetic field shielding (91) is applied to the receptacle, and the active operating state being reached when the receptacle is released by removing the magnetic field shielding (91).

9. Electro-pneumatic solenoid valve (1) according to claim 7 or 8, wherein the magnetic field shield (91) is combined with guide means by which the magnetic field shield (91) is moved from a stowing position to a shielding position in which the magnetic field is brought into its passive operating state, and/or in which a stowing position for the magnetic field shielding (91) is provided, wherein the stowing position is remote from a shielding position in which the magnetic field is brought into the passive operating state and/or the magnetic field is substantially unaffected in the stowing position.

10. Electro-pneumatic solenoid valve (1) according to one of the preceding claims, wherein the electropneumatic actuator includes a coil (21) particularly comprising a coil channel (33) surrounded by the coil (21) and a particularly magnetically soft core structure (15) axially and radially surrounding the coil (21), wherein in particular the coil (21) and the core structure (15) form the magnetic actuator of the electromagnetic control device (7) and/or are arranged stationary relative to the solenoid valve housing (3).

11. Electro-pneumatic solenoid valve (1) according to claim 10, wherein the core structure (15) forms a permanent-magnet-facing front end wall (37) covering the axial end of the coil (21), wherein a material weakening on the front end wall (37) or the core structure (15) defining the material weakening are configured such that, in the active operating state, magnetic field lines of the magnetic field are deflected towards the valve member due to magnetic saturation in the region of the weakened front end wall (37), such that, in the active operating state, the valve member is magnetically attracted towards the valve member-side front end wall (37) of the core structure (15) against a spring biasing the valve member, in order to close a ventilation duct (41, 43) formed in the core structure by the valve member, its closure member, the core structure (15) being formed with an inner core (31) which extends axially through the coil channel (33) and is adjoined by a counterimpact piece (35) which corresponds axially beyond the coil end on the valve member side, a ventilation duct (41, 43) being formed in the inner core and the valve member being able to close and release the ventilation duct (41, 43).

12. Electro-pneumatic solenoid valve (1) according to one of the preceding claims, wherein the valve member is designed as a movably mounted impact member (11) and/or is designed with an axially projecting closure member (45) which releases or occupies an air duct, the valve member being arranged axially offset from the coil end with respect to a coil axis, wherein the magnetic field is fixedly arranged at a coil end diametrically opposite to the coil end on the valve member side, a displacement end position of the movable magnetic field is provided.

13. Electro-pneumatic solenoid valve (1) according to one of claims 10 to 12 if dependent on claim 10, wherein the valve member designed as a movably mounted impact member (11), is forced into a closing or release position, is biased by a spring element, wherein the electromagnetic actuator (7) and the valve member actuation (9) act to move the valve member against the constraining force bringing the valve member into the forced position, wherein the valve member is guided movably, translatorically perpendicularly to a valve baffle plate (11) in a cavity, wherein the cavity is formed on the one hand by the core structure (15) of a stator of the electromagnetic actuator, on the other hand is formed by a housing wall, wherein an aeration or ventilation duct (41, 43) is formed in the core structure (15) and an aeration or ventilation duct (41, 43) is formed in the solenoid valve housing wall, wherein in a first operating position the valve member closes or releases the aeration or ventilation duct (41, 43) in the core structure (15) and in a second operating position the valve member closes or releases the aeration or ventilation duct (41, 43) in the solenoid valve housing wall, wherein an output duct (47) for the solenoid valve (1) is provided which opens into the impact gap and/or is formed in the solenoid valve housing (3).

14. Electro-pneumatic solenoid valve (1) according to one of the preceding claims, wherein the safety device comprises a position sensor which detects the position of the magnetic field and/or a magnetic field shielding relative to its active operating position, and/or a magnetic field sensor in the region of the electromagnetic actuator and/or the valve member which detects the presence or absence of the magnetic field of the valve member actuation (9).

15. Electro-pneumatic field device, pneumatic positioner, pneumatic actuator for actuating a control valve of a process plant, comprising an electro-pneumatic solenoid valve (1) according to one of the preceding claims.

## Revendications

1. Électrovanne électropneumatique (1), destinée à un équipement de terrain à fonctionnement pneumatique d'une installation de processus technique, comme une installation chimique, une installation pétrochimique, une installation de traitement de produits alimentaires, comme une brasserie, une installation nucléaire ou similaires comprenant :
- un élément de vanne, qui pour la ventilation et/ou la purge d'une sortie d'électrovanne est déplaçable entre au moins deux positions de service ;
- un système de réglage électromagnétique (7), destiné à déplacer l'élément de vanne entre les au moins deux positions de service ; et
- un actionnement magnétique de l'élément de vanne (9) supplémentaire par rapport au système de réglage électromagnétique (7), également destiné à déplacer l'élément de vanne indépendamment d'un actionnement du système de réglage électromagnétique (7) ;
l'actionnement de l'élément de vanne (9) comportant un champ magnétique pour l'actionnement sans contact de l'élément de vanne et un mécanisme d'actionnement permettant d'amener l'actionnement de l'élément de vanne entre un état de mode passif, dans lequel l'élément de vanne reste immobile, en raison de l'actionnement de l'élément de vanne et un état de mode actif dans lequel sous l'influence du champ magnétique, l'élément de vanne est déplacé à partir de l'une des positions de service, **caractérisé en ce qu'**il est prévu un système de sécurité, pourvu d'un avertisseur électronique, lequel coupe le mécanisme d'actionnement lors le système de réglage électromagnétique (7) fonctionne.

2. Électrovanne électropneumatique (1) selon la revendication 1, sur laquelle le champ magnétique est créé par un aimant permanent (61) qui est créé dans une matière magnétique dure et/ou qui génère un champ magnétique, le mécanisme d'actionnement étant associé à l'aimant permanent (61) de telle sorte que l'aimant permanent (61) puisse être amené entre son état de mode passif et son état de mode actif.

3. Électrovanne électropneumatique (1) selon la revendication 1 ou 2, sur laquelle le mécanisme d'activation comprend un système de déplacement, destiné à déplacer le champ magnétique par rapport à l'élément de vanne, le système de déplacement fixant au moins une position finale de déplacement, dans une position finale de déplacement, le champ magnétique déplaçant l'élément de vanne.

4. Électrovanne électropneumatique (1) selon la revendication 3, le système de déplacement comprenant un axe de pivotement autour duquel le champ magnétique est susceptible de pivoter par rapport à l'au moins une position finale de déplacement.

5. Électrovanne électropneumatique (1) selon la revendication 3 ou 4, le système de déplacement comprenant un guidage de champ magnétique qui guide le champ magnétique en translation ou en rotation.

6. Électrovanne électropneumatique (1) selon l'une quelconque des revendications 3 à 5, le système de déplacement fixant deux positions de déplacement finales entre lesquelles le champ magnétique peut être déplacé, notamment le système de déplacement comportant une butée de déplacement, destinée à fixer la position finale de déplacement respective, la butée de déplacement étant formée d'un composant supplémentaire, magnétique dur ou magnétique permanent, le composant supplémentaire étant monté sur un corps d'électrovanne.

7. Électrovanne électropneumatique (1) selon l'une quelconque des revendications précédentes, sur laquelle le mécanisme d'actionnement comporte un écran à champ magnétique (91) destiné à bloquer et/ou à détourner le champ magnétique, qui est associé au champ magnétique de sorte à être bloqué et/ou détourné par rapport à l'élément de vanne pour l'état de mode passif ou l'état de mode actif, dans l'état de mode passif, l'écran de champ magnétique (91) protégeant et/ou détournant le champ magnétique par rapport à l'élément de vanne de telle sorte qu'un déplacement de l'élément de vanne sous l'influence du champ magnétique soit empêché et dans l'état de mode actif, l'écran de champ magnétique laissant le champ magnétique sans influence ou le détournant en direction de l'élément de vanne de telle sorte que l'élément de vanne soit déplacé, sous l'influence du champ magnétique.

8. Électrovanne électropneumatique (1) selon la revendication 7, sur laquelle l'écran de champ magnétique est mobile par rapport au champ magnétique et/ou il est prévu un logement voisin d'une génération de champ magnétique pour l'écran de champ magnétique (91) dans lequel l'écran de champ magnétique (91) est fixement monté sur l'électrovanne (1), sur la face extérieure d'un corps d'électrovanne (3), lors du garnissage du logement avec l'écran de champ magnétique (91), l'état de mode passif étant atteint et lors de la libération du logement par retrait de l'écran de champ magnétique (91) l'état de mode actif étant atteint.

9. Électrovanne électropneumatique (1) selon la revendication 7 ou 8, sur laquelle l'écran de champ magnétique (91) est associé à un système de guidage et l'écran de champ magnétique (91) est déplacé d'une position de rangement dans une position de protection, dans laquelle le champ magnétique est amené dans son état de mode passif et/ou dans laquelle est prévue une position de rangement pour l'écran de champ magnétique (91), la position de rangement étant éloignée d'une position de protection, dans laquelle le champ magnétique est amené dans l'état de mode passif et/ou dans la position de rangement, le champ magnétique n'étant sensiblement pas influencé.

10. Électrovanne électropneumatique (1) selon l'une quelconque des revendications précédentes, sur laquelle le système de réglage électropneumatique comporte une bobine (21), pourvue d'un canal de bobine (33) entouré par la bobine (21) et une structure centrale (15) magnétique douce, entourant la bobine (21) en direction axiale et radiale, la bobine (21) et la structure centrale (15) formant l'actionneur magnétique du système de réglage électromagnétique (7) et/ou étant montée de manière stationnaire par rapport à un corps d'électrovanne (3).

11. Électrovanne électropneumatique (1) selon la revendication 10, sur laquelle la structure centrale (15) forme une paroi d'extrémité frontale (37) magnétique permanente, recouvrant l'extrémité axiale de la bobine (21), un affaiblissement de matière sur la paroi d'extrémité frontale (37) ou la structure centrale (15) définissant l'affaiblissement de matière étant conçu(e), pour que dans l'état de mode actif, en raison d'une saturation magnétique dans la région de la paroi d'extrémité frontale (37) affaiblie, des lignes de champ magnétique du champ magnétique soient détournées en direction de l'élément de vanne, de sorte que dans l'état de mode actif, l'élément de vanne soit magnétiquement attiré à l'encontre d'un ressort qui précontraint l'élément de vanne vers la paroi d'extrémité frontale (37) de la structure centrale (15), du côté de l'élément de vanne, pour obturer un canal de ventilation ou de purge (41, 43) conçu dans la structure centrale (15) par l'élément de vanne, son élément de fermeture, la structure centrale (15) étant conçue avec une âme intérieure (31) s'étendant en direction axiale à travers le canal de bobine (33) sur lequel se raccorde une pièce de contre-impact (35) s'étendant en direction axiale au-delà de l'extrémité de bobine du côté de l'élément de vanne, un canal de ventilation ou de purge (41, 43) étant conçu dans l'âme intérieure (31) et l'élément de vanne étant susceptible d'obturer ou de libérer le canal de ventilation ou de purge (41, 43).

12. Électrovanne électropneumatique (1) selon l'une quelconque des revendications précédentes, sur laquelle l'élément de vanne est conçu sous la forme d'un élément d'impact (11) logé en étant mobile et/ou avec un élément d'obturation (45) débordant en direction axiale, libérant ou occupant un canal d'air, l'élément de vanne étant placé en déport en direction axiale de l'extrémité de bobine, par rapport à un axe de bobine, sur une extrémité de bobine, diamétralement au vis-à-vis de l'extrémité de bobine du côté de l'élément de vanne, le champ magnétique étant placé de manière stationnaire, une position finale de déplacement du champ magnétique mobile étant prévue.

13. Électrovanne électropneumatique (1) selon l'une quelconque des revendications 10 à 12 si dépendante de la revendication 10, sur laquelle l'élément de vanne conçu sous la forme d'un élément d'impact (11) logé en étant mobile est contraint dans une position d'obturation ou de libération, précontraint par un élément à ressort, pour déplacer l'élément de vanne, le système de réglage électromagnétique (7) et l'actionnement de l'élément de vanne (9) agissant à l'encontre de la force de contrainte amenant l'élément de vanne dans la position forcée, l'élément de vanne étant guidé dans une cavité, de manière mobile, translatable, perpendiculaire à un déflecteur de vanne (11), la cavité étant formée d'une part par la structure centrale (15) d'un stator du système de réglage électromagnétique, d'autre part, par une paroi de corps, un canal de ventilation ou de purge (41, 43) étant conçu dans la structure centrale (15) et un canal de ventilation ou de purge (41, 43) étant conçu dans la paroi du corps d'électrovanne, dans une première position de service, l'élément de vanne obturant ou libérant le canal de ventilation ou de purge (41, 43) dans la structure centrale (15) et dans une deuxième position de service, obturant ou libérant le canal de ventilation ou de purge (41, 43) dans la paroi du corps d'électrovanne, un canal de sortie (47) étant prévu pour l'électrovanne (1) qui débouche dans l'interstice d'impact et/ou qui est conçu dans le corps d'électrovanne (3)

14. Électrovanne électropneumatique (1) selon l'une quelconque des revendications précédentes, sur laquelle le système de sécurité comprend un capteur de position, qui détecte la position du champ magnétique et/ou d'un écran de champ magnétique par rapport à sa position de mode actif et/ou comprend un capteur de champ magnétique dans la région du système de réglage électromagnétique et/ou de l'élément de vanne, qui détecte la présence ou l'absence du champ magnétique de l'actionnement de l'élément de vanne (9).

15. Équipement de terrain électromagnétique, positionneur pneumatique, actionneur pneumatique, destiné à actionner une vanne de régulation d'une installation de processus technique, comprenant une électrovanne électropneumatique (1) selon l'une quelconque des revendications précédentes.
